# FASCICULE DE BREVET EUROPEEN

(11) **EP 2 522 259 B1**
(45) Date de publication et mention de la délivrance du brevet: **25.12.2013**
(21) Numéro de dépôt: 12166518.6
(22) Date de dépôt: 03.05.2012
(51) Int. Cl.: A47J 19/02

(54) **Dispostif de pressage d'aliments comportant un organe de déversement à inclinaison réglable**
Vorrichtung zum Auspressen von Lebensmitteln, die mit einem Ausgießorgan mit regulierbarer Neigung ausgestattet ist
Food-pressing device comprising a pouring member with adjustable inclination

(30) Priorité: 13.05.2011 FR 1154194
(43) Date de publication de la demande: 14.11.2012
(73) Titulaire: SEB S.A., 69130 Ecully (FR)
(72) Inventeur: Sentagnes, Clémence, 65000 Tarbes (FR); Smit, Robert, 65290 Louey (FR); Peyras, Lionel, 65100 Lourdes (FR)
(74) Mandataire: Cémeli, Eric Philippe Laurent

(56) Documents cités:
- FR-A1- 2 775 176
- US-A- 1 615 734
- US-A- 1 750 764

## Description

La présente invention concerne le domaine technique des dispositifs et appareils électroménagers de préparation culinaire prévus pour l'extraction d'aliments liquides ou semi-liquides.

La présente invention concerne plus particulièrement un dispositif de pressage d'aliments pour extraire des jus et/ou des coulis et/ou de l'huile, comportant un organe de déversement latéral.

II est connu du document US 1 615 734 un dispositif pour presser les fruits et légumes, comportant une vis de pressage tournant dans un conduit filtrant, ainsi qu'un organe de déversement latéral agencé sous le conduit filtrant. Un tel dispositif permet de recueillir les jus ou coulis pour les déverser dans un récipient approprié.

La vitesse d'écoulement de la matière obtenue par pressage dépend notamment de sa viscosité. Une vitesse d'écoulement trop importante peut générer des éclaboussures. Une vitesse d'écoulement trop lente peut conduire à des blocages de l'écoulement, et la reprise non controlée de l'écoulement peut également générer des éclaboussures.

Un but de la présente invention est de proposer un dispositif de pressage d'aliments permettant de mieux contrôler l'écoulement de la matière pressée.

Un autre but de la présente invention est de proposer un dispositif de pressage d'aliments facilitant l'utilisation de récipients de différentes tailles.

Un autre but de la présente invention est de proposer un appareil électroménager de préparation culinaire comportant un dispositif de pressage d'aliments qui permette de mieux contrôler l'écoulement de la matière pressée.

Un autre but de la présente invention est de proposer un appareil électroménager de préparation culinaire comportant un dispositif de pressage d'aliments qui facilite l'utilisation de récipients de différentes tailles.

Ces buts sont atteints avec un dispositif de pressage d'aliments pour extraire une partie liquide ou semi-liquide desdits aliments, comportant un conduit présentant une ouverture d'admission d'aliments et au moins une zone de filtration, une vis de pressage entrainée en rotation dans le conduit contre la ou l'une au moins des zones de filtration, et un organe de déversement latéral s'étendant en dessous de la ou de l'une au moins des zones de filtration, du fait que l'organe de déversement latéral est monté pivotant par rapport au conduit de manière à autoriser plusieurs positions d'écoulement présentant des pentes d'écoulement différentes, et que le conduit comporte au moins une conformation de retenue prévue pour retenir au moins deux conformations d'accrochage de l'organe de déversement latéral, et/ou au moins deux conformations de retenue prévues pour retenir au moins une conformation d'accrochage de l'organe de déversement latéral, de sorte que le conduit peut porter l'organe de déversement latéral selon au moins deux positions d'écoulement distinctes. Ces dispositions permettent de régler l'inclinaison de l'organe de déversement latéral selon plusieurs positions définies, sans utiliser d'appui tel qu'un récipient prévu pour recueillir la partie liquide ou semi-liquide des aliments pressés. L'utilisateur peut ainsi mieux contrôler l'écoulement de cette partie liquide ou semi-liquide dans le récipient.

Selon une forme de réalisation avantageuse, l'organe de déversement latéral, respectivement le conduit, comporte au moins un ergot issu d'une languette élastiquement déformable, susceptible d'être engagé dans au moins deux crans du conduit, respectivement de l'organe de déversement latéral, et/ou l'organe de déversement latéral, respectivement le conduit, comporte au moins deux ergots issus d'au moins une languette élastiquement déformable, susceptibles d'être engagés dans au moins un cran du conduit, respectivement de l'organe de déversement latéral. Ainsi l'organe de déversement latéral peut passer d'une inclinaison à une autre inclinaison par simple rotation de l'organe de déversement latéral par rapport au conduit.

Avantageusement alors, le ou les crans est/sont ménagé(s) sur une extrémité libre du conduit, respectivement à l'intérieur d'une extrémité libre de l'organe de déversement latéral, le ou les ergots étant ménagés à l'intérieur d'une couronne fendue de l'organe de déversement latéral, respectivement sur une couronne fendue du conduit. Le ou les crans et/ou le ou les ergots peuvent ainsi plus aisément être rendus visibles, ce qui permet à l'utilisateur de mieux appréhender le réglage de la position de l'organe de déversement latéral.

Selon une forme de réalisation avantageuse, l'organe de déversement latéral comporte une partie tubulaire entourant la ou les zones de filtration du conduit. Cette disposition permet de limiter les éclaboussures et de canaliser un maximum de matière extraite hors de l'organe de déversement latéral.

Avantageusement alors, la partie tubulaire est prolongée par un déversoir présentant un fond raccordé à deux parois latérales. Cette disposition permet de favoriser un écoulement lent de la matière extraite.

Avantageusement alors, chaque paroi latérale est prolongée par une paroi supérieure interne. Cette disposition permet de limiter les éclaboussures tout en facilitant l'observation de l'écoulement de la matière extraite.

Selon une forme de réalisation avantageuse, le conduit comprend une partie tubulaire filtrante dans laquelle sont ménagées la ou les zones de filtration. Cette disposition permet de simplifier le montage du dispositif de pressage d'aliments.

Avantageusement encore, l'organe de déversement latéral est guidé en rotation sur la partie tubulaire filtrante. Cette disposition permet d'obtenir un dispositif de pressage d'aliments de construction simple.

Selon une forme de réalisation avantageuse, la partie tubulaire filtrante comporte un bati surmoulé autour de la ou des zones de filtration. La série de crans et/ou le ou les ergots élastiques peuvent ainsi être issus du bâti.

Avantageusement alors, le conduit comprend un corps tubulaire, dans lequel est ménagée l'ouverture d'admission d'aliments, la partie tubulaire filtrante étant montée amovible par rapport au corps tubulaire. Cette disposition permet de simplifier le montage et le nettoyage du dispositif de pressage d'aliments.

Selon une forme de réalisation avantageuse, le conduit porte un axe d'entrainement sur lequel est montée la vis de pressage. En alternative, la vis de pressage pourrait notamment être entrainée directement ou par l'intermédiaire d'un pignon denté.

Avantageusement alors, l'axe d'entraînement est monté dans le corps tubulaire. Cette disposition permet de simplifier le montage du dispositif de pressage d'aliments.

Avantageusement alors, l'axe d'entraînement est monté amovible par rapport au corps tubulaire. Cette disposition permet de simplifier le nettoyage du dispositif de pressage d'aliments.

Selon une forme de réalisation avantageuse, la ou au moins l'une des conformations de retenue est susceptible de retenir la ou au moins l'une des conformations d'accrochage de sorte que le conduit porte l'organe de déversement latéral selon une position de retenue dans laquelle l'écoulement hors de l'organe de déversement latéral est empêché. Cette disposition permet d'arrêter l'écoulement de la partie liquide ou semi-liquide des aliments pressés, par exemple pour changer de récipient.

Ces buts sont atteints également avec un appareil électroménager de préparation culinaire comportant un boitier moteur et un accessoire de préparation culinaire monté amovible par rapport au boîtier moteur, l'accessoire de préparation culinaire comportant une partie rotative susceptible d'être entrainée en rotation par le boîtier moteur, du fait que l'accessoire de préparation culinaire forme un dispositif de pressage d'aliments selon l'une au moins des caractéristiques précitées, la partie rotative comprenant la vis de pressage.

L'invention sera mieux comprise à l'étude d'un exemple de réalisation, pris à titre nullement limitatif, illustré dans les figures annexées, dans lesquelles :
- la figure 1 illustre un appareil électroménager de préparation culinaire comportant un accessoire de préparation culinaire formant un dispositif de pressage d'aliments selon l'invention,
- la figure 2 est une vue schématique en éclaté de l'accessoire de préparation culinaire illustré sur la figure 1,
- la figure 3 est une vue en coupe longitudinale de l'accessoire de préparation culinaire illustré sur les figures 1 et 2,
- la figure 4 est une vue en perspective de l'accessoire de préparation culinaire illustré sur les figures 1 à 3,
- la figure 5 est une vue agrandie d'une partie de la figure 4.

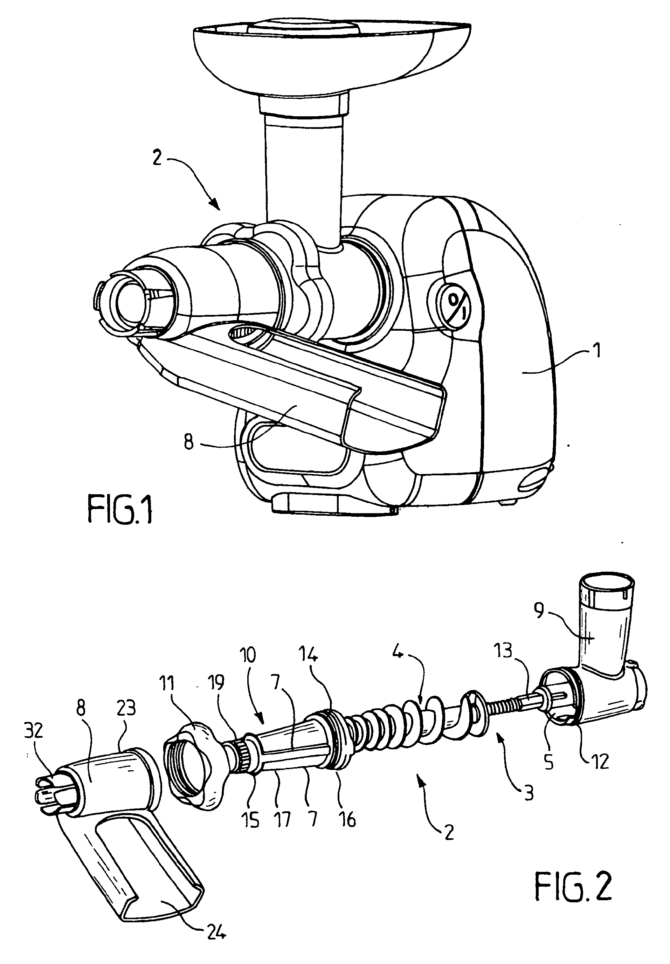

L'appareil électroménager de préparation culinaire illustré sur la figure 1 comporte un boitier moteur 1 et un accessoire de préparation culinaire 2 monté amovible par rapport au boîtier moteur 1.

L'accessoire de préparation culinaire 2 comporte une partie rotative 3 susceptible d'être entrainée en rotation par le boîtier moteur 1, mieux visible sur la figure 2. A cet effet le boîtier moteur 1 comporte un moteur électrique relié électriquement à des moyens de commande et mécaniquement à des moyens d'entraînement prévus pour entrainer la partie rotative de l'accessoire de préparation culinaire 2, non représentés aux figures.

L'accessoire de préparation culinaire 2 forme un dispositif de pressage d'aliments pour extraire une partie liquide ou semi-liquide desdits aliments. A cet effet la partie rotative 3 comprend une vis de pressage 4. Dans l'exemple de réalisation illustré sur les figures, la vis de pressage 4 présente un axe de rotation sensiblement horizontal lorsque l'accessoire de préparation culinaire 2 est monté sur le boîtier moteur 1.

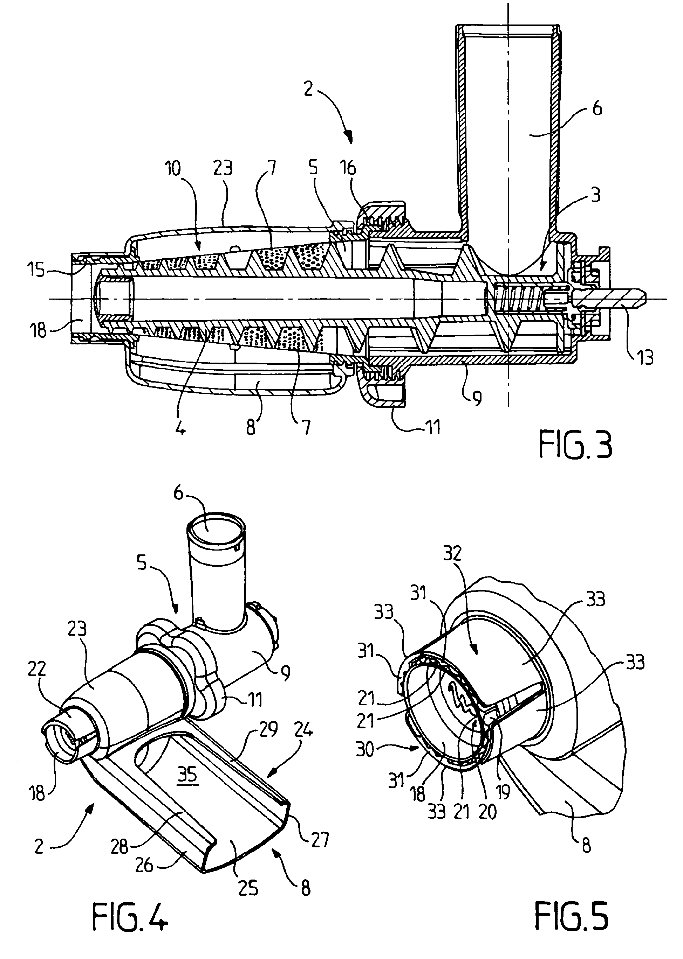

Tel que mieux visible sur la figure 3, le dispositif de pressage d'aliments comporte un conduit 5 présentant une ouverture d'admission d'aliments 6 et au moins une zone de filtration 7. La vis de pressage 4 est entrainée en rotation dans le conduit 5 contre la ou l'une au moins des zones de filtration 7.

Dans l'exemple de réalisation illustré sur les figures, le conduit 5 comprend un corps tubulaire 9 dans lequel est ménagé l'ouverture d'admission d'aliments 6, et une partie tubulaire filtrante 10 dans laquelle sont ménagées la ou les zones de filtration 7. La partie tubulaire filtrante 10 est montée amovible par rapport au corps tubulaire 9, par exemple au moyen d'un écrou 11 vissé sur le corps tubulaire 9. A cet effet le corps tubulaire 9 porte des filets extérieurs 12. La partie tubulaire filtrante 10 est tronconique.

Le conduit 5 porte un axe d'entrainement 13 sur lequel est montée la vis de pressage 4. Plus particulièrement dans l'exemple de réalisation illustré sur les figures, l'axe d'entraînement 13 est monté amovible par rapport au corps tubulaire 9. La partie rotative 3 de l'accessoire de préparation culinaire 2 comprend aussi l'axe d'entrainement 13.

Selon une forme de réalisation avantageuse, la partie tubulaire filtrante 10 comporte un bati 14 surmoulé autour de la ou des zones de filtration 7. Le bati 14 présente deux extrémités tubulaires 15, 16 reliées par au moins un montant 17. L'extrémité tubulaire 16 adjacente au corps tubulaire 9 porte l'écrou 11.

Une extrémité libre 18 du conduit 5 forme une sortie à déchets et/ou résidus solides issus de la vis de pressage 4. L'extrémité libre 18 forme une collerette crantée 19, mieux visible sur la figure 5. L'extrémité libre 18 correspond à l'extrémité tubulaire 15 de la partie tubulaire filtrante 10 opposée à l'axe d'entrainement 13.

Un organe de déversement latéral 8, mieux visible sur les figures 1, 2 et 4, s'étend en dessous de la ou de l'une au moins des zones de filtration 7. Si désiré, l'organe de déversement latéral 8 est amovible par rapport au conduit 5. Selon une caractéristique importante de l'invention, l'organe de déversement latéral 8 est monté pivotant par rapport au conduit 5, de manière à autoriser plusieurs positions stables d'écoulement présentant des pentes d'écoulement différentes. Si désiré, l'organe de déversement latéral 8 peut présenter au moins une position stable de retenue, dans laquelle la matière pressée reste à l'intérieur de l'organe de déversement latéral.

Selon la forme de réalisation préférée illustrée sur les figures, des crans 21 sont ménagés sur une extrémité libre 18 du conduit 5. Plus particulièrement, la partie tubulaire filtrante 10 présente au moins une portion de collerette crantée 19 formant une série de crans 21. Par ailleurs, des ergots 31 sont ménagés à l'intérieur d'une couronne fendue 32 de l'organe de déversement latéral 8. Les ergots 31 sont ainsi issus de plusieurs languettes 33 élastiquement déformables.

Dans l'exemple de réalisation illustré sur les figures, la couronne fendue 32 comporte quatre languettes 33 présentant des zones internes crantées formant les ergots 31, le quatrième volet étant dépourvu de zone interne crantée.

De préférence le nombre de crans 21 est supérieur ou égal au nombre d'ergots 31. Ainsi pour chaque position stable de l'organe de déversement latéral chaque ergot 31 peut être logé dans l'un des crans 21.

Ainsi dans l'exemple de réalisation illustré sur les figures, l'organe de déversement latéral 8 comporte au moins un ergot 31, issu d'une languette 33 élastiquement déformable, qui est susceptible d'être engagé successivement dans au moins deux crans 21 du conduit 5, lorsque l'organe de déversement latéral 8 est pivoté par rapport au conduit 5.

De ce fait, le conduit 5 comporte au moins une conformation de retenue 20 prévue pour retenir au moins deux conformations d'accrochage 30 de l'organe de déversement latéral 8, de sorte que le conduit 5 peut porter l'organe de déversement latéral 8 selon au moins deux positions d'écoulement distinctes.

Mais encore, dans l'exemple de réalisation illustré sur les figures, l'organe de déversement latéral 8 comporte au moins deux ergots 31 issus d'au moins une languette 33 élastiquement déformable, qui sont susceptibles d'être engagés dans au moins un cran 21, lorsque l'organe de déversement latéral 8 est pivoté par rapport au conduit 5.

De ce fait, le conduit 5 comporte au moins deux conformations de retenue 20 prévues pour retenir au moins une conformation d'accrochage 30 de l'organe de déversement latéral 8, de sorte que le conduit 5 peut porter l'organe de déversement latéral 8 selon au moins deux positions d'écoulement distinctes.

L'organe de déversement latéral 8 comporte une partie tubulaire 23 entourant la ou les zones de filtration 7 du conduit 5. Plus particulièrement, la partie tubulaire 23 de l'organe de déversement latéral 8 entoure la partie tubulaire filtrante 10 et s'étend autour des extrémités tubulaires 15, 16 de la partie filtrante 10.

L'organe de déversement latéral 8 est guidé en rotation sur le conduit 5. Plus particulièrement, l'organe de déversement latéral 8 est guidé en rotation sur la partie tubulaire filtrante 10. A cet effet, les extrémités tubulaires 15, 16 de la partie filtrante 10 forment des moyens de guidage en rotation de la partie tubulaire 23 de l'organe de déversement latéral 8. De préférence, l'axe de pivotement de l'organe de déversement latéral 8 est confondu avec l'axe de rotation de la vis de pressage 4.

De préférence, l'organe de déversement latéral 8 est monté amovible sur le conduit 5.

La partie tubulaire 23 est prolongée par un déversoir 24 présentant un fond 25 raccordé à deux parois latérales 26, 27. Chaque paroi latérale 26, 27 est prolongée par une paroi supérieure interne 28, 29 s'étendant au dessus du fond 25 en ménageant une ouverture supérieure 35.

L'appareil électroménager de préparation culinaire et le dispositif de pressage selon l'invention fonctionnent et s'utilisent de la manière suivante.

L'utilisateur monte l'accessoire de préparation culinaire 2 sur le boîtier moteur 1 et positionne l'organe de déversement latéral 8 selon l'inclinaison souhaitée en pivotant l'organe de déversement latéral 8 par rapport au conduit 5.

La couronne fendue 32 de l'organe de déversement latéral 8 forme une série de clips souples ou languettes 33 élastiquement déformables portant les ergots 31, qui peuvent se déformer pour que les ergots 31 passent les sommets des crans 21 du conduit 5, tout en maintenant l'organe de déversement latéral 8 en position lorsque les ergots 31 sont disposés à l'intérieur des crans 21, formant des conformations d'accrochage 30 retenues par des conformations de retenue 20. L'organe de déversement latéral 8 peut ainsi occuper plusieurs positions angulaires stables par rapport au conduit 5, ces positions présentant des pentes d'écoulement différentes.

Les ergots 31 issus de languettes 33 élastiquement déformables peuvent ainsi passer d'un cran 21 à un autre cran 21 par simple rotation de l'organe de déversement latéral 8 par rapport au conduit 5, tout en assurant une retenue de l'organe de déversement latéral 8 dans des positions déterminées. Dans les positions stables de l'organe de déversement latéral 8, chaque ergot 31 est engagé dans un des crans 21, de sorte que la déformation élastique des languettes 33 peut être minimisée, voire annulée.

Le conduit 5 comporte ainsi des moyens de retenue prévus pour retenir des moyens d'accrochage de l'organe de déversement latéral, de sorte que le conduit 5 peut porter l'organe de déversement latéral 8 selon au moins deux positions d'écoulement distinctes.

De plus, si désiré, le ou les crans 21 et le ou les ergots 31 peuvent être agencés de sorte que l'extrémité libre du déversoir 24 puisse être relevée au dessus de l'extrémité du déversoir 24 reliée à la partie tubulaire 23. L'écoulement hors de l'organe de déversement latéral 8 est stoppé. La ou au moins l'une des conformations de retenue 20 est alors susceptible de retenir la ou au moins l'une des conformations d'accrochage 30 de sorte que le conduit 5 porte l'organe de déversement latéral 8 selon une position de retenue dans laquelle l'écoulement hors de l'organe de déversement latéral 8 est empêché.

La forme fermée de l'organe de déversement latéral 8 permet à l'utilisateur de ne pas recevoir les éventuelles projections de jus ou de coulis lors de la réalisation.

A titre de variante, le conduit 5 pourrait présenter au moins un cran 21 prévu pour recevoir plusieurs ergots 31 de l'organe de déversement latéral 8, ou l'organe de déversement latéral 8 pourrait présenter au moins un ergot 31 prévu pour être engagé dans plusieurs crans 21 du conduit 5.

A titre de variante, la ou les conformations de retenue 20 du conduit 5 ne sont pas nécessairement formées par un ou plusieurs crans 21, et la ou les conformations d'accrochage 30 de l'organe de déversement latéral 8 ne sont pas nécessairement formés par un ou plusieurs ergots 31. Notamment, la ou les conformations de retenue 20 du conduit 5 pourraient être formées par un ou plusieurs ergots, et la ou les conformations d'accrochage 30 de l'organe de déversement latéral 8 pourraient être formées par un ou plusieurs crans 21. Le conduit 5 comporte alors au moins un ergot 31 susceptible d'être engagé dans au moins deux crans 21 de l'organe de déversement latéral 8 et/ou au moins deux ergots 31 susceptibles d'être engagés dans au moins un cran 21 de l'organe de déversement latéral 8. Si désiré, le ou les crans 21 peuvent notamment être ménagés à l'intérieur d'une extrémité libre de l'organe de déversement latéral 8, le ou les ergots 31 pouvant alors être ménagés sur une couronne fendue du conduit 5.

A titre de variante, le ou les ergots 31 ne sont pas nécessairement issus d'une ou plusieurs languettes 33 élastiquement déformables. L'organe de déversement latéral 8 pourrait alors être déplacé en translation par rapport au conduit 5, pour dégager le ou les ergots 31 de l'un ou de plusieurs des crans 21, faire pivoter l'organe de déversement latéral 8 par rapport au conduit 5, et engager le ou l'un des ergots 31 dans au moins un autre cran 21.

A titre de variante, la partie tubulaire filtrante 10 n'est pas nécessairement montée amovible par rapport au corps tubulaire 9 au moyen de l'écrou 11, mais pourrait par exemple être assemblée par vissage.

A titre de variante, le conduit 5 ne comporte pas nécessairement une partie tubulaire filtrante 10 montée amovible par rapport à un corps tubulaire 9. En alternative, l'ouverture d'admission 6 pourrait notamment être ménagée dans la partie tubulaire filtrante 10.

A titre de variante, la vis de pressage 4 n'est pas nécessairement entrainée par un axe d'entraînement 13 monté dans le conduit 5. Notamment, la vis de pressage 4 pourrait être entrainée par le boîtier moteur 1 ou par une manivelle montée sur l'une des extrémités de la vis de pressage 4.

A titre de variante, la partie tubulaire 23 de l'organe de déversement latéral 8 ne présente pas nécessairement une géométrie de révolution en dehors des zones de guidage en rotation sur le conduit 5.

La présente invention n'est nullement limitée à l'exemple de réalisation décrit et à ses variantes, mais englobe de nombreuses modifications dans le cadre des revendications.

## Revendications

1. Dispositif de pressage d'aliments pour extraire une partie liquide ou semi-liquide desdits aliments, comportant un conduit (5) présentant une ouverture d'admission d'aliments (6) et au moins une zone de filtration (7), une vis de pressage (4) entrainée en rotation dans le conduit (5) contre la ou l'une au moins des zones de filtration (7), et un organe de déversement latéral (8) s'étendant en dessous de la ou de l'une au moins des zones de filtration (7), **caractérisé en ce que** l'organe de déversement latéral (8) est monté pivotant par rapport au conduit (5) de manière à autoriser plusieurs positions d'écoulement présentant des pentes d'écoulement différentes, et **en ce que** le conduit (5) comporte au moins une conformation de retenue (20) prévue pour retenir au moins deux conformations d'accrochage (30) de l'organe de déversement latéral (8), et/ou au moins deux conformations de retenue (20) prévues pour retenir au moins une conformation d'accrochage (30) de l'organe de déversement latéral (8), de sorte que le conduit (5) peut porter l'organe de déversement latéral (8) selon au moins deux positions d'écoulement distinctes.

2. Dispositif de pressage d'aliments selon la revendication 1, **caractérisé en ce que** l'organe de déversement latéral (8), respectivement le conduit (5), comporte au moins un ergot (31) issu d'une languette (33) élastiquement déformable, susceptible d'être engagé dans au moins deux crans (21) du conduit (5), respectivement de l'organe de déversement latéral (8), et/ou **en ce que** l'organe de déversement latéral (8), respectivement le conduit (5), comporte au moins deux ergots (31) issus d'au moins une languette (33) élastiquement déformable, susceptibles d'être engagés dans au moins un cran (21) du conduit (5), respectivement de l'organe de déversement latéral (8).

3. Dispositif de pressage d'aliments selon la revendication 2, **caractérisé en ce que** le ou les crans (21) est/sont ménagé(s) sur une extrémité libre (18) du conduit (5), respectivement à l'intérieur d'une extrémité libre de l'organe de déversement latéral (8), et **en ce que** le ou les ergots (31) sont ménagés à l'intérieur d'une couronne fendue (32) de l'organe de déversement latéral (8), respectivement sur une couronne fendue du conduit (5).

4. Dispositif de pressage d'aliments selon l'une des revendications 1 à 3, **caractérisé en ce que** l'organe de déversement latéral (8) comporte une partie tubulaire (23) entourant la ou les zones de filtration (7) du conduit (5).

5. Dispositif de pressage d'aliments selon la revendication 4, **caractérisé en ce que** la partie tubulaire (23) est prolongée par un déversoir (24) présentant un fond (25) raccordé à deux parois latérales (26, 27).

6. Dispositif de pressage d'aliments selon la revendication 5, **caractérisé en ce que** chaque paroi latérale (26, 27) est prolongée par une paroi supérieure interne (28, 29).

7. Dispositif de pressage d'aliments selon l'une des revendications 1 à 6, **caractérisé en ce que** le conduit (5) comprend une partie tubulaire filtrante (10) dans laquelle sont ménagées la ou les zones de filtration (7).

8. Dispositif de pressage d'aliments selon la revendication 7, **caractérisé en ce que** l'organe de déversement latéral (8) est guidé en rotation sur la partie tubulaire filtrante (10).

9. Dispositif de pressage d'aliments selon l'une des revendications 7 ou 8, **caractérisé en ce que** la partie tubulaire filtrante (10) comporte un bati (14) surmoulé autour de la ou des zones de filtration (7).

10. Dispositif de pressage d'aliments selon l'une des revendications 7 à 9, **caractérisé en ce que** le conduit (5) comprend un corps tubulaire (9) dans lequel est ménagé l'ouverture d'admission d'aliments (6), la partie tubulaire filtrante (10) étant montée amovible par rapport au corps tubulaire (9).

11. Dispositif de pressage d'aliments selon l'une des revendications 1 à 10, **caractérisé en ce que** le conduit (5) porte un axe d'entrainement (13) sur lequel est montée la vis de pressage (4).

12. Dispositif de pressage d'aliments selon la revendication 10 et la revendication 11, **caractérisé en ce que** l'axe d'entraînement (13) est monté dans le corps tubulaire (9).

13. Dispositif de pressage d'aliments selon la revendication 12, **caractérisé en ce que** l'axe d'entraînement (13) est monté amovible par rapport au corps tubulaire (9).

14. Dispositif de pressage d'aliments selon l'une des revendications 1 à 13, **caractérisé en ce que** la ou au moins l'une des conformations de retenue (20) est susceptible de retenir la ou au moins l'une des conformations d'accrochage (30) de sorte que le conduit (5) porte l'organe de déversement latéral (8) selon une position de retenue dans laquelle l'écoulement hors de l'organe de déversement latéral (8) est empêché.

15. Appareil électroménager de préparation culinaire comportant un boitier moteur (1) et un accessoire de préparation culinaire (2) monté amovible par rapport au boîtier moteur (1), l'accessoire de préparation culinaire (2) comportant une partie rotative (3) susceptible d'être entrainée en rotation par le boîtier moteur (1), **caractérisé en ce que** l'accessoire de préparation culinaire (2) forme un dispositif de pressage d'aliments selon l'une des revendications 1 à 14 et **en ce que** la partie rotative (3) comprend la vis de pressage (4).

## Patentansprüche

1. Vorrichtung zum Auspressen von Lebensmitteln zur Extraktion eines flüssigen oder halbflüssigen Anteils dieser Lebensmittel, umfassend eine Leitung (5) mit einer Öffnung zur Einfüllung der Lebensmittel (6) und mindestens einen Filterbereich (7), eine Pressschnecke (4), die innerhalb der Leitung (5) in Richtung des Filterbereichs bzw. mindestens eines der Filterbereiche (7) in Drehung versetzt wird, und ein seitliches Abgießelement (8), das unterhalb des Filterbereichs bzw. mindestens eines der Filterbereiche (7) angeordnet ist, **dadurch gekennzeichnet, dass** das seitliche Abgießelement (8) in Bezug auf die Leitung (5) schwenkbar montiert ist, so dass mehrere Durchlaufpositionen mit unterschiedlichen Durchlaufneigungen möglich sind, und **dadurch gekennzeichnet, dass** die Leitung (5) mit mindestens einem Haltekörper (20), der für die Rückhaltung von mindestens zwei Einhakelementen (30) des seitlichen Abgießelements (8) ausgelegt ist, und/oder mit mindestens zwei Haltekörpern (20), die für die Rückhaltung von mindestens einem Einhakelement (30) des seitlichen Abgießelements (8) ausgelegt sind, ausgestattet ist, so dass die Leitung (5) das seitliche Abgießelement (8) in mindestens zwei verschiedenen Durchlaufpositionen stützen kann.

2. Vorrichtung zum Auspressen von Lebensmitteln gemäß Patentanspruch 1, **dadurch gekennzeichnet, dass** das seitliche Abgießelement (8) bzw. die Leitung (5) mindestens einen Zapfen (31) umfasst, der aus einer elastisch verformbaren Lasche (33) herausragt und mit mindestens zwei Rastungen (21) der Leitung (5) bzw. des seitlichen Abgießelements (8) verbunden werden kann, und/oder **dadurch gekennzeichnet, dass** das seitliche Abgießelement (8) bzw. die Leitung (5) mindestens zwei Zapfen (31) umfasst, die aus mindestens einer elastisch verformbaren Lasche (33) herausragen und mit mindestens einer Rastung (21) der Leitung (5) bzw. des seitlichen Abgießelements (8) verbunden werden können.

3. Vorrichtung zum Auspressen von Lebensmitteln gemäß Patentanspruch 2, **dadurch gekennzeichnet, dass** die Rastung bzw. die Rastungen (21) an einem freien Ende (18) der Leitung bzw. im Inneren eines freien Endes des seitlichen Abgießelements (8) angebracht ist/sind, und **dadurch gekennzeichnet, dass** der bzw. die Zapfen (31) im Inneren eines Schlitzrings (32) des seitlichen Abgießelements (8) bzw. an einem Schlitzring der Leitung (5) angebracht ist/sind.

4. Vorrichtung zum Auspressen von Lebensmitteln gemäß Patentanspruch 1 bis 3, **dadurch gekennzeichnet, dass** das seitliche Abgießelement (8) einen rohrförmigen Abschnitt (23) aufweist, von dem der Filterbereich bzw. die Filterbereiche (7) der Leitung (5) umschlossen ist/sind.

5. Vorrichtung zum Auspressen von Lebensmitteln gemäß Patentanspruch 4, **dadurch gekennzeichnet, dass** der rohrförmige Abschnitt (23) über einen Auslass (24) verlängert wird, der einen Boden (25) aufweist, welcher mit zwei Seitenwänden (26, 27) verbunden ist.

6. Vorrichtung zum Auspressen von Lebensmitteln gemäß Patentanspruch 5, **dadurch gekennzeichnet, dass** jede Seitenwand (26, 27) über eine obere Innenwand (28, 29) verlängert wird.

7. Vorrichtung zum Auspressen von Lebensmitteln gemäß Patentanspruch 1 bis 6, **dadurch gekennzeichnet, dass** die Leitung (5) ein rohrförmiges Filterstück (10) umfasst, in dem der Filterbereich bzw. die Filterbereiche (7) angeordnet ist/sind.

8. Vorrichtung zum Auspressen von Lebensmitteln gemäß Patentanspruch 7, **dadurch gekennzeichnet, dass** das seitliche Abgießelement (8) drehbar an dem rohrförmigen Filterstück (10) gelagert ist.

9. Vorrichtung zum Auspressen von Lebensmitteln gemäß Patentanspruch 7 bzw. 8, **dadurch gekennzeichnet, dass** das rohrförmige Filterstück (10) an einem Gestell (14) befestigt ist, das um den Filterbereich bzw. die Filterbereiche (7) herumgeformt ist.

10. Vorrichtung zum Auspressen von Lebensmitteln gemäß Patentanspruch 7 bis 9, **dadurch gekennzeichnet, dass** die Leitung (5) ein röhrenförmiges Gehäuse (9) umfasst, in dem die Öffnung zur Einfüllung der Lebensmittel (6) angeordnet ist, wobei das rohrförmige Filterstück (10) abnehmbar an dem röhrenförmigen Gehäuse (9) befestigt ist.

11. Vorrichtung zum Auspressen von Lebensmitteln gemäß Patentanspruch 1 bis 10, **dadurch gekennzeichnet, dass** die Leitung (5) eine Antriebsachse (13) umfasst, an der die Pressschnecke (4) montiert ist.

12. Vorrichtung zum Auspressen von Lebensmitteln gemäß Patentanspruch 10 und Patentanspruch 11, **dadurch gekennzeichnet, dass** die Antriebsachse (13) innerhalb des röhrenförmigen Gehäuses (9) montiert ist.

13. Vorrichtung zum Auspressen von Lebensmitteln gemäß Patentanspruch 12, **dadurch gekennzeichnet, dass** die Antriebsachse (13) abnehmbar an dem röhrenförmigen Gehäuse (9) befestigt ist.

14. Vorrichtung zum Auspressen von Lebensmitteln gemäß Patentanspruch 1 bis 13, **dadurch gekennzeichnet, dass** der Haltekörper bzw. mindestens einer der Haltekörper (20) für die Rückhaltung des Einhakelements bzw. mindestens eines der Einhakelemente (30) ausgelegt ist, so dass die Leitung (5) das seitliche Abgießelement (8) in einer Rückhalteposition stützt, in der ein Auslaufen aus dem seitlichen Abgießelement (8) verhindert wird.

15. Elektrohaushaltsgerät für kulinarische Zubereitungen, umfassend ein Motorgehäuse (1) und ein Zubehör für die kulinarische Zubereitung (2), das abnehmbar am Motorgehäuse (1) befestigt ist, wobei das Zubehör für kulinarische Zubereitungen (2) ein drehbares Teil (3) umfasst, das über das Motorgehäuse (1) in Drehung versetzt werden kann, **gekennzeichnet dadurch, dass** das Zubehör für kulinarische Zubereitungen (2) eine Vorrichtung zum Auspressen von Lebensmitteln gemäß Patentanspruch 1 bis 14 bildet, und **gekennzeichnet dadurch, dass** das drehbare Teil (3) die Pressschnecke (4) umfasst.

## Claims

1. Food pressing apparatus for extracting a liquid or semi-liquid part from said food, comprising a duct (5) having a food inlet opening (6) and at least one filtration area (7), a pressing screw (4) driven in rotation in the duct (5) against the filtration area or at least one of the filtration areas (7), and a lateral discharging member (8) extending below the filtration area or at least one of the filtration areas (7), **characterised in that** the lateral discharging member (8) is mounted to pivot around the duct (5) so as to allow several flow positions having different flow gradients, and **in that** the duct (5) comprises at least one retaining conformation (20) adapted to retain at least two conformations (30) for hooking the lateral discharging member (8), and/or at least two retaining conformations (20) provided for retaining at least one conformation (30) for hooking the lateral discharging member (8), so that the duct (5) can carry the lateral discharging member (8) according to at least two distinct flow positions.

2. Food pressing apparatus according to claim 1, **characterised in that** the lateral discharging member (8), respectively the duct (5), comprises at least one lug (31) from an elastically deformable tongue (33), capable of being engaged in at least two notches (21) of the duct (5), respectively of the lateral discharging member (8), and/or **in that** the lateral discharging member (8), respectively the duct (5), comprises at least two lugs (31) from at least one elastically deformable tongue (33), capable of being engaged in at least one notch (21) of the duct (5), respectively of the lateral discharging member (8).

3. Food pressing apparatus according to claim 2, **characterised in that** the notch(es) (21) is/are formed on a free end (18) of the duct (5), respectively within a free end of the lateral discharging member (8), and **in that** the lug(s) (31) is/are formed inside a split ring (32) of the lateral discharging member (8), respectively on a split ring of the duct (5).

4. Food pressing apparatus according to one of claims 1 to 3, **characterised in that** the lateral discharging member (8) comprises a tubular section (23) surrounding the filtration area(s) (7) of the duct (5).

5. Food pressing apparatus according to claim 4, **characterised in that** the tubular section (23) is extended by a discharge pipe (24) having a bottom (25) connected to two side walls (26, 27).

6. Food pressing apparatus according to claim 5, **characterised in that** each side wall (26, 27) is extended by an upper internal wall (28, 29).

7. Food pressing apparatus according to one of claims 1 to 6, **characterised in that** the duct (5) comprises a filtrating tubular section (10) in which the filtration area(s) (7) are formed.

8. Food pressing apparatus according to claim 7, **characterised in that** the lateral discharging member (8) is guided in rotation on the filtrating tubular section (10).

9. Food pressing apparatus according to claim 7 or 8, **characterised in that** the filtrating tubular section (10) comprises a frame (14) overmoulded around the filtration area(s) (7).

10. Food pressing apparatus according to one of claims 7 to 9, **characterised in that** the duct (5) comprises a tubular body (9) in which the food inlet opening (6) is formed, the filtrating tubular section (10) being removably mounted with respect to the tubular body (9).

11. Food pressing apparatus according to one of claims 1 to 10, **characterised in that** the duct (5) carries a drive shaft (13) on which the pressing screw (4) is mounted.

12. Food pressing apparatus according to claims 10 and 11, **characterised in that** the drive shaft (13) is mounted in the tubular body (9).

13. Food pressing apparatus according to claim 12, **characterised in that** the drive shaft (13) is removably mounted with respect to the tubular body (9).

14. Food pressing apparatus according to one of claims 1 to 13, **characterised in that** the retaining conformation or at least one of the retaining conformations (20) is capable of retaining the hooking conformation or at least one of the hooking conformations (30) so that the duct (5) carries the lateral discharging member (8) in a retaining position preventing flow out of the lateral discharging member (8).

15. Food preparation household electrical appliance comprising a motor unit (1) and a food preparation accessory (2) removably mounted with respect to the motor unit (1), the food preparation accessory (2) comprising a rotating section (3) capable of being driven in rotation by the motor unit (1), **characterised in that** the food preparation accessory (2) forms a food pressing apparatus according to one of claims 1 to 14 and **in that** the rotating section (3) comprises the pressing screw (4).
